# EUROPEAN PATENT APPLICATION

(11) **EP 4 794 183 A1**
(43) Date of publication of application: **19.08.2026**
(21) Application number: 26158620.0
(22) Date of filing: 13.02.2026
(51) Int. Cl.: H02M 1/00, H02M 1/34, H02M 3/335, H02M 3/337, H02M 7/48

(54) **BIDIRECTIONAL DC-TO-DC POWER CONVERTER CIRCUITS AND SYSTEMS**

(30) Priority: 17.02.2025 US 202563759472 P
(71) Applicant: Transportation IP Holdings, LLC, Norwalk, CT 06851 (US)
(72) Inventor: IHUEL, Francois, Erie, PA, 06851 (US)
(74) Representative: K&L Gates LLP

(57) **Abstract**

A power converter circuit may include a primary (EP) and a secondary (ES) stage. The primary stage may include a first primary winding (Tr1-P) connected in parallel with a first conversion stage (CPP1), and a second primary winding (Tr2-P) similarly connected with a second conversion stage (CPP2). Each of the first and second conversion stages may include a first primary switch (T1, T3) and first auxiliary switching circuit (CAC1, CAC3), and a second primary switch (T2, T4) and second auxiliary switching circuit (CAC2, CAC4). For each conversion stage, the first auxiliary switching circuit and the second auxiliary switching circuit may include a storage circuit (SC1, SC2, SC3, SC4) having a snubber capacitor (Cs1, Cs2, Cs3, Cs4) and diode (Ds1, Ds2. Ds3. Ds4), and a recirculation circuit (RC1, RC2, RC3, RC4) having a recirculation inductor (Lr1, Lr2, Lr3, Lr4), diode (Dr1, Dr2, Dr3, Dr4), and switch (T5, T6, T7,T8). The storage circuit (SC1, SC3) of the first auxiliary switching circuit (CAC1, CAC3) may be connected in parallel with the first primary switch (T1, T3), and the storage circuit (SC2, SC4) of the second auxiliary switching circuit (CAC2, CAC4) may be similarly connected with the second primary switch (T2, T4).

## Description

### BACKGROUND

### CROSS REFERENCE TO RELATED APPLICATION

This application claims the benefit of and priority under 35 U.S.C. § 119(e) to U.S. Provisional Application Serial No. 63/759,472 filed February 17, 2025, entitled "BIDIRECTIONAL DC-to-DC POWER CONVERTER CIRCUITS AND SYSTEMS," the contents of which is hereby incorporated by reference in its entirety herein.

### Technical Field

The subject matter described herein relates to systems and devices to convert electrical power. In particular, the subject matter described herein relates to a switch mode converter circuit and system.

### Discussion of Art

Vehicles may be powered by various technologies. Some aspects of vehicular power may include power from liquid, gaseous, or solid fuels. In another aspect, a vehicle may be powered by electricity. The electricity may be stored onboard the vehicle in an onboard electrical storage device, for example in a battery or a battery stack, or may be received from one or more external sources. Examples of external electrical sources may include an overhead wire (a catenary) or a source located below or along side of the vehicle (a third rail).

Vehicles may include multiple electrically powered systems. Non-limiting examples of such electrically powered systems may include onboard electrical storage devices (internal battery systems), information processing systems (computing processors, communication systems), internal environmental systems (interior lights, heating/air conditioning systems), and annunciator systems (external lights and horns), among others. The electrically powered systems may differ in their respective power requirements. such as voltage requirements and/or current requirements. In one aspect, electrical circuits may be used to convert a voltage from one power source (either an external electrical source or an onboard electrical source) to supply the electrically powered systems with electricity having another voltage. Further, such electrical circuits may be used to isolate the power transferred to each of the electrically powered systems, thereby reducing potential power supply noise received by each of the electrically powered systems. It may be desirable to have an electrical circuit that differs from those that are currently available.

### SUMMARY

The subject matter is disclosed herein below and in the accompanying drawings and figures.

In one aspect, a power converter circuit may include a primary stage and a secondary stage. The primary stage may include a first primary winding connected in parallel with a first conversion stage, and a second primary winding connected in parallel with a second conversion stage. The first conversion stage and the second conversion stages may each include a first primary switch and a first auxiliary switching circuit, and a second primary switch and a second auxiliary switching circuit. For each of the first conversion stage and the second conversion stage, the first auxiliary switching circuit and the second auxiliary switching circuit may include a storage circuit having a snubber capacitor and a snubber diode and a recirculation circuit having a recirculation inductor, a recirculation diode, and a recirculation switch. The storage circuit of the first auxiliary switching circuit may be connected in parallel with the first primary switch, and the storage circuit of the second auxiliary switching circuit may be connected in parallel with the second primary switch.

In one aspect, a DC-to-DC converter circuit may incorporate a primary circuit and a secondary circuit. The DC-to-DC converter may be configured to cause a DC current derived from a first DC source having a first DC voltage to pass in alternating directions through the primary circuit. The secondary circuit may be coupled to the primary circuit so that a secondary current may be induced in the secondary circuit, passing in alternating directions through the secondary circuit. The secondary current may be rectified and stored in a storage device which may act as a second DC source having a second DC voltage. It may be useful to convert the second DC voltage back to the first DC voltage. A second DC-to-DC converter may be used to convert the second DC voltage back to the first DC voltage. However, such a strategy would double the cost of converting between the DC voltages. It would be useful to have an alternative and less expensive method for converting DC voltages between two values.

### BRIEF DESCRIPTION OF THE DRAWINGS

The subject matter disclosed herein may be understood from reading the following description of non-limiting aspects, with reference to the attached drawings, wherein below:
FIG. 1 is a schematic of a vehicle in electrical communication with one or more external electrical power sources, according to one aspect of the disclosure;
FIG. 2A is a fully realized schematic of a first example of a DC-to-DC power converter system, according to one aspect of the disclosure;
FIG. 2B is a high-level schematic of a primary stage of the DC-to-DC power converter circuit depicted in FIG. 2A, according to one aspect of the disclosure;
FIGS. 2C and 2D are schematics of storage circuits in the high-level schematic depicted in FIG 2B, according to one aspect of the disclosure;
FIGS. 2E and 2F are schematics of recirculation circuits in the high-level schematic depicted in FIG 2B, according to one aspect of the disclosure;
FIGS. 3A through 3D depict graphs of a cycle of voltages and currents established in components of the DC-to-DC converter circuit depicted in FIGS. 2A and 2B, according to one aspect of the disclosure;
FIG. 4 is a schematic of a second example of a DC-to-DC power converter system, according to one aspect of the disclosure; and
FIG. 5 is a schematic of a third example of a DC-to-DC power converter system, according to one aspect of the disclosure.

### DETAILED DESCRIPTION

The subject matter described herein relates to circuits and systems for converting electrical power and isolating a source of the electrical power from a receiving circuit of the converted electrical power.

Further, a vehicle may receive electrical power from an off-board electrical source. The off-board electrical source may be a DC power source or an AC power source. The electrical power may be used for vehicle propulsion and may also be stored in onboard electrical storage devices such as a battery or a battery bank composed of multiple batteries in electrical communication with each other. The electrical power from the off-board source, or from the onboard electrical storage devices, may be used to power other vehicular electrical systems including braking systems, internal environment control systems, vehicular control systems, and the like. Each of the vehicular systems may have its own power requirement, such as DC or AC voltage and/or current. Further, each of the vehicular systems, or the off-board electrical source, may induce power line noise. It may be desirable to have an electrical system or circuit capable of both converting the electrical power from one voltage to another, and to electrically isolate the power lines between electrical systems.

In one example, a vehicle may receive DC electrical power from an off-board electrical source having a source DC voltage and capable of providing a source DC current. A DC-to-DC power converter circuit or system may convert the source DC voltage to an onboard vehicle DC voltage that may be stored in an onboard electrical storage device. A similar DC-to-DC power converter circuit or system may convert the off-board electrical power for use by any one or more electrical systems used in the vehicle. The DC-to-DC power converter circuit or system may be said to operate in a forward power conversion mode by converting the off-board DC power to an onboard DC power.

Additionally, a similar DC-to-DC power converter circuit or system may convert the electrical power from the onboard electrical storage device for use by any one or more electrical systems used in the vehicle. In an additional example, a similar DC-to-DC power converter circuit or system may convert the electrical power from the onboard electrical storage device to be used by an off-board electrical system. The DC-to-DC power converter circuit or system may be said to operate in a backward power conversion mode by converting the onboard DC power to an off-board DC power. In one example, electrical power stored in the onboard electrical storage device may be converted and supplied to the off-board electrical source, such as a power grid, an overhead wire (a catenary), or a source located below or along side of the vehicle (a third rail). In another example, electrical power stored in the onboard electrical storage device may be converted and supplied to an alternative off-board electrical system, for example a power system for a conveyance on which the vehicle may temporarily reside.

It may be desirable to have a single bidirectional DC-to-DC power converter circuit or system that may operate to convert power from an external DC source for storage by the onboard electrical storage device in the forward power conversion mode, or convert power from the onboard electrical storage device for use by the external DC source in a backward power conversion mode. In this way, a single bidirectional DC-to-DC power converter circuit or system may be used instead of two unidirectional DC-to-DC power converter circuits or systems, thereby saving equipment costs and maintenance overhead.

In one aspect, a power converter circuit system may include a power converter circuit and a control circuit. The power converter circuit may include a primary stage and a secondary stage. The primary stage may include a first primary winding and a second primary winding, and a first conversion stage and a second conversion stage connected in parallel with the first primary winding and the second primary winding, respectively. The first conversion stage and the second conversion stage may each comprises respective first primary switches and second primary switches, and respective first auxiliary switching circuits and second auxiliary switching circuits. For each of the first conversion stage and the second conversion stage, the first auxiliary switching circuits and the second auxiliary switching circuits may include a respective storage circuit having a snubber capacitor and a snubber diode, and a respective recirculation circuit having a recirculation inductor, a recirculation diode, and a recirculation switch. For each of the first conversion stage and the second conversion stage, the respective storage circuits may be connected in parallel with their respective first primary switch and second primary switch. The control circuit may be configured to control each of the first primary switches and each of the second primary switches. The control circuit may be configured to control each recirculation switch to enable the respective recirculation circuit in a forward power conversion mode of operation and to disable the recirculation circuit in a backward power conversion mode of operation. The secondary stage may include one or more secondary windings and a rectifier circuit connected to each of the one or more secondary windings. The secondary windings may be in magnetic communication with the primary windings. The rectifier circuits may include a rectifier composed of a plurality of diodes, and a plurality of secondary switches, each secondary switch connected in parallel with one of the plurality of diodes. The control circuit may be configured to control each of the plurality of secondary switches.

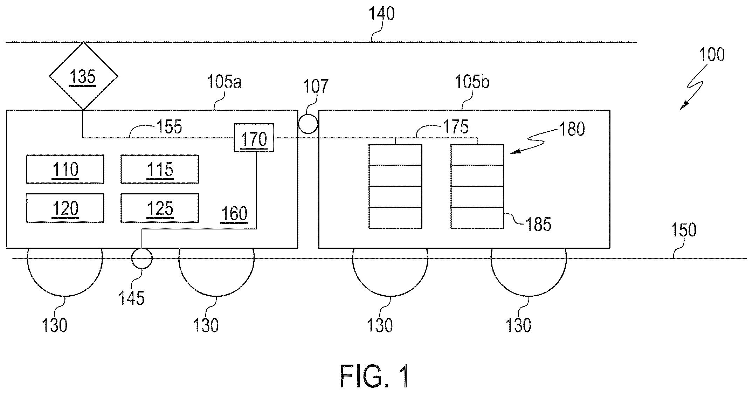

FIG. 1 is a schematic of a vehicle **100** in electrical communication with one or more external electrical power sources. In one aspect, the vehicle may constitute a single conveyance that is not physically connected to any other conveyances during operation. In other aspects, the vehicle may be composed of multiple conveyances **105a,b** that may be mechanically coupled **107** to each other, such as one or more trailers, propulsion-generating rail cars **105a,** nonpropulsion-generating rail cars **105b,** and the like. Even if the conveyances are not mechanically connected to each other, the vehicle may still permit communication among the multiple conveyances to coordinate movements so that the conveyances move together as a unified vehicle (for example, in a convoy). As used, the term convoy here is functionally interchangeable with other like terms, such as consist, swarm, platoon, fleet, train, and other vehicle groupings.

In one aspect, the vehicle may be a rail vehicle and may be part of a vehicle group that forms a train that travels over a route. A route or path may be a railroad track, and a rail vehicle may be a locomotive. Another vehicle may be a truck. Trucks may include a highway capable semi-truck, mining truck, logging truck, and the like. In one aspect, the vehicle may move over a route using wheels **130** actuated by the propulsion system or engine. The vehicle in other examples may include one or more other types of vehicles such as automobiles, aircraft, buses, agricultural vehicles, marine vessels, mining vehicles, and/or other off-highway vehicles (e.g., vehicles that are not legally permitted and/or are not designed for travel on public roadways).

In one aspect, the vehicle may receive electrical power from an off-board electrical source. In one aspect, the off-board electrical source may be an overhead catenary **140** that may be electrically coupled to a first electrical power bus **155** by a pantograph **135.** In another aspect, the off-board electrical source may be a third rail **150** that may be disposed under the vehicle or along side of the vehicle. The third rail may be electrically coupled to a second electrical power bus **160** by a contact block **145.** The vehicle may be able to receive off-board electrical power from either the catenary, the third rail, or both the catenary and the third rail. Further, the first electrical power bus may be the same as the second electrical power bus.

Electrical power from the off-board electrical source may be routed to a DC-to-DC power converter circuit or system **170** to convert a voltage of the off-board electrical source to a voltage for use by onboard electrical systems. The DC-to-DC power converter may also serve to electrically isolate the off-board electrical source from the onboard electrical systems. A converter output power bus **175** may be used to transfer output power from the DC-to-DC power converter to an electrical storage device **180.** In one aspect, the electrical storage device may be composed of a single battery **185.** In an alternative aspect, the electrical storage device may be composed of multiple batteries electrically connected together. The vehicle depicted in FIG. 1 is composed of two conveyances, in which the electrical storage device is disposed in the second conveyance. However, the electrical storage device may be located in any one or more of the conveyances constituting the vehicle. For example, if the vehicle is composed of a single conveyance, the electrical storage device may be disposed in the single conveyance. Alternatively, if the vehicle is composed of two or more conveyances, the electrical storage device may be disposed in any one or more of the multiple conveyances.

The vehicle may further include a controller **110.** The controller may include a control circuit, a communication device, an input device, and a display device. The control circuit may be operably connected to the communication device, the input device, and the display device via wired and/or wireless communication pathways. The vehicle may also include a propulsion system **120,** an engine **115,** and a braking subsystem **125,** which may operate together to propel the vehicle along the route or path and actively slow or stop the vehicle. The controller may also be operably connected to the propulsion system, the engine, and the braking subsystem.

A control circuit may be disposed onboard the vehicle (unless specified otherwise, both onboard and off-board control circuits may be referred to herein as a control circuit) and may perform at least some of the operations described herein to control one or more operations of the DC-to-DC power converter circuit. In one aspect, at least a portion of the control circuit together with the DC-to-DC power converter circuit may constitute a DC-to-DC power converter system. The control circuit may represent hardware circuitry that includes and/or is connected to one or more processors (for example, one or more microprocessors, image processors, mathematical calculation accelerators, integrated circuits, microcontrollers, field programmable gate arrays, etc.). The control circuit may include and/or be connected to a tangible and/or a non- transitory computer-readable storage medium (e.g., memory unit). The memory unit may be disposed onboard the vehicle. The memory unit may store programmed instructions (for example, software) that may be executed by the one or more processors to perform the operations of the control circuit described herein. The memory unit additionally or alternatively may store additional information, such as designated switching sequences to coordinate the operation of the various switches within the DC-to-DC power converter depending on the power conversion mode, as disclosed below.

Terms such as "processing" or "computing" or "calculating" or "determining" or "displaying" and the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The communication device may represent hardware circuitry that can communicate electrical signals and may function wirelessly. For example, the communication device can represent transceiving circuitry, one or more antennas, and the like. The transceiving circuitry may include a transceiver or a separate transmitter and receiver. Electrical signals received or transmitted by the transceiving circuity may form data packets that in the aggregate represent messages. In an aspect, the communication device may be a radio that wirelessly communicates the electrical signals as radio frequency (RF) signals. The communication device can transmit or broadcast messages that are generated by the control circuit. The communication device may receive messages and forward them to the control circuit for analysis of the received messages.

The display device can be an integrated display screen onboard the vehicle and/or a display screen on a personal, a tablet, a handheld device (for example, a smartphone), or a wearable device (for example, a smartwatch). The display device may display visual information to a human operator concerning the movement of the vehicle. The control circuit may use the display device to provide a recommended course of operation or control strategy to the human operator, which the operator can select using the input device.

The propulsion subsystem and the braking subsystem of the vehicle may represent the hardware components and any associated electronics and software used to provide work for propelling and slowing the vehicle along the route. A propulsion system can include one or more traction motors, inverters, combustion engines, battery systems, air brake systems, friction brake systems, dynamic or regenerative brake systems (such as those that may use motors), and the like. In the illustrated aspect, the propulsion may be provided by exerting a torque on the wheels of the vehicle to rotate the wheels relative to the route.

An input device can be an onboard instrument panel, hand brake, steering wheel, throttle lever, throttle and/or brake pedal, computer, tablet computer, handheld computer, keyboard, touchpad, joystick, and the like, and may enable a human operator to interact with the onboard controller and control operations of the vehicle.

In some aspects of a DC-to-DC power converter circuit, a primary stage of a transformer may be connected at its mid-point to an input conductor via an inductor, and at its two ends to a second input conductor. Two primary switches may be respectively connected on one and the other of the branches starting from the ends of the primary and may be activated alternately according to a duty cycle adapted to the desired transfer rate under control of the power converter control circuit. A secondary stage of the transformer may include a secondary winding connected to a rectifier circuit comprising a plurality of rectifier diodes and secondary switches. The rectifier circuit may be connected to terminals of a filtering capacitor. Each of the plurality of secondary switches may be connected in parallel with a respective one of the rectifier diodes. In one aspect, the secondary stage may include a first secondary winding connected to a first rectifier circuit and a second secondary winding connected to a second rectifier circuit. In one example, both the first rectifier circuit and the second rectifier circuit may be composed of rectifier diodes and their associated secondary switches. Further, in one example, the first secondary winding may be connected in parallel with the second secondary winding. In an alternative example, the first secondary winding may be connected in series with the second secondary winding. In one aspect, the single rectifier circuit or the combination of the first rectifier circuit and second rectifier circuit may be connected to terminals of a single filtering capacitor. A rectified continuous voltage may thus be available at the output of the DC-to-DC converter circuit or system.

Disclosed herein is a switch mode power DC-to-DC power converter circuit and system with a current input comprising a primary stage and a secondary stage. The primary stage may include first and second primary windings and first and second conversion stages each having a push-pull type configuration. The first and second conversion stages may be connected respectively in parallel to the ends of the first and second primary windings. The first conversion stage may include first primary switches and the second conversion stage may include second primary switches. The first conversion stage and the second conversion stage may each include a first and a second auxiliary switching circuit. Each of the first auxiliary switching circuit and the second auxiliary switching circuit may further include a storage circuit and a recirculation circuit.

In one aspect, the two conversion stages may be connected to a common potential, the first conversion stage with its negative potential connected to the common potential and the second conversion stage with its positive potential connected to the common potential. For example, the first storage circuits of the first and second conversion stages may be connected to each other via the common potential, and the second storage circuits of the first and second conversion stages may be connected to each other via the common potential.

In one example, each storage circuit may comprise a snubber capacitor and a snubber diode connected in series. In one aspect, the snubber diodes may be connected to the common potential. In another aspect, the storage circuits may be connected in parallel with a respective primary switch.

In one example, each recirculation circuit may comprise a recirculation inductor, a recirculation diode, and a recirculation switch connected in series. In a further aspect, the recirculation diodes of the first recirculation circuits of the first conversion stage may be coupled to the storage circuits of the second conversion stage, for example between the snubber diode and the snubber capacitor. Similarly, the recirculation diodes of the second recirculation circuits of the second conversion stage may be coupled to the storage circuits of the first conversion stage, for example between the snubber diode and the snubber capacitor. The recirculation switches may be connected at one end to a respective end of the first primary winding or the second primary winding.

In one aspect, the first and second primary switches may be closed simultaneously by a power converter control circuit thereby coupling the first and second primary windings. In a further aspect, the secondary stage may comprise only a single secondary winding and a rectifier circuit connected to the single secondary winding. In this aspect, the first and second primary windings may be magnetically couple to the single secondary winding through a common core. In an additional aspect, the secondary stage may be composed of two secondary winding, in which each secondary winding is connected to a separate rectifier circuit. In this aspect, the first secondary winding may be magnetically coupled to the first primary winding, and the second secondary winding may be magnetically coupled to the second primary winding. Further, in this aspect, the first primary winding, the second primary winding, the first secondary winding and the second secondary winding may share a common core. Alternatively, the first primary winding and the first secondary winding may share a common core and the second primary winding and the second secondary winding may share a separate common core.

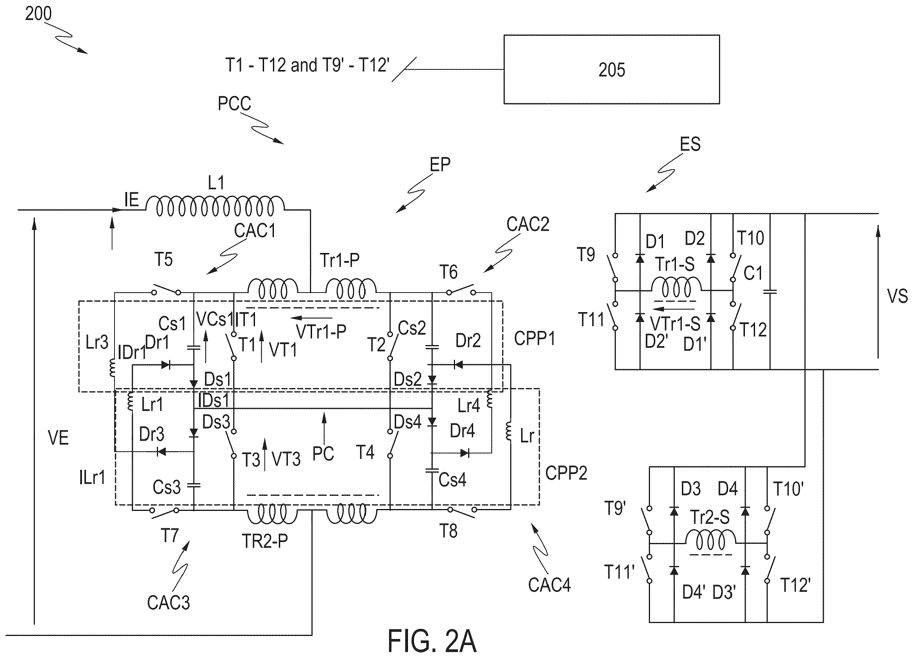

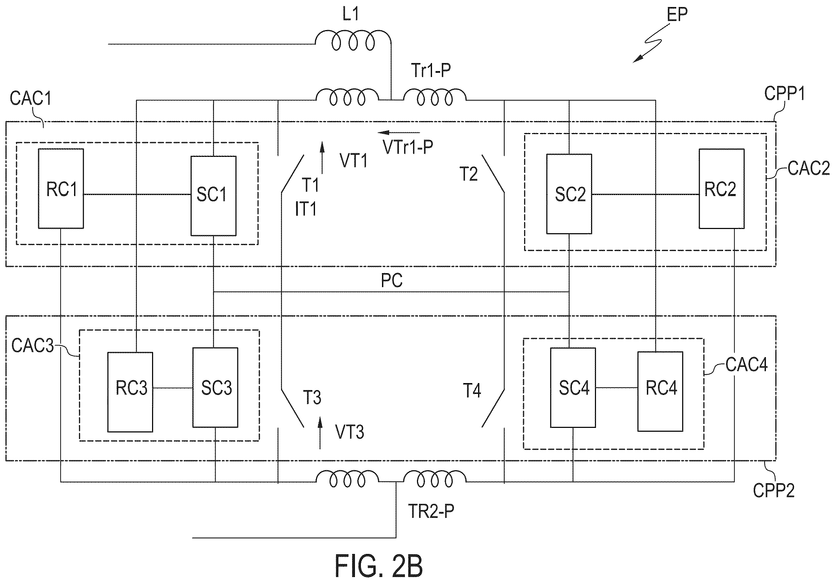

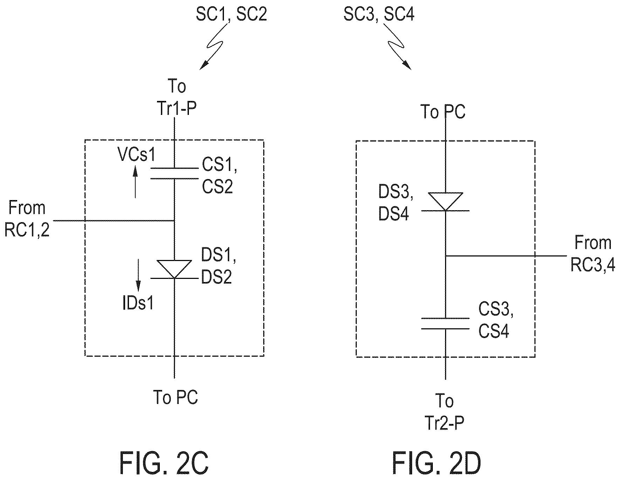

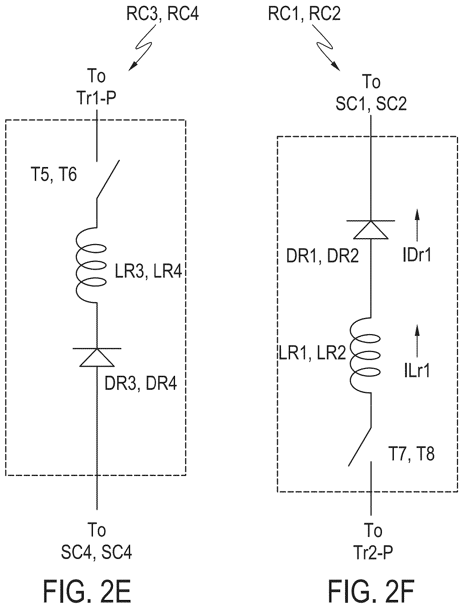

FIGS. 2A-2F depict schematics of a first example of a DC-to-DC power converter system **200** (hereafter converter system). FIG. 2A depicts a fully realize schematic of the DC-to-DC power converter system. FIG. 2B depicts a high-level schematic of the primary stage **EP** of the DC-to-DC power converter system. FIGS. 2C and 2D depict a detail of the storage circuits of the primary stage, and FIGS. 2E and 2F depict a detail of the recirculation circuits of the primary stage.

The DC-to-DC power converter system may include a DC-to-DC power converter circuit **PCC** (hereafter, converter circuit) and a power converter control circuit **205.** The power converter control circuit may be configured to operate and synchronize the switches of the DC-to-DC power converter circuit, as disclosed below. In one aspect, the DC-to-DC power converter circuit may include a primary stage **EP** connected to a current input **IE,** and a secondary stage **ES** having an output voltage **VS.**

The power converter control circuit may comprise one or more processors and one or more memory circuits. The power converter control circuit represents hardware circuitry that includes and/or is connected to one or more processors (e.g., one or more microprocessors, image processors, mathematical calculation accelerators, integrated circuits, microcontrollers, field programmable gate arrays, etc.). The power converter control circuit may include and/or be connected to a tangible and non- transitory computer-readable storage medium (e.g., memory unit). The memory unit may store programmed instructions ( e.g., software) that may be executed by the one or more processors to perform the operations of the power converter control circuit described herein. As used herein, the terms "processor" and "computer," and related terms, e.g., "processing device," "computing device," and "controller," may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. And can represent any programmed or programmable electronic device that can store, retrieve, and process data.

"Software" or "computer program" as used herein includes, but is not limited to, one or more computer readable and/or executable instructions that cause a computer or other electronic device to perform functions, actions, and/or behave in a predetermined manner. The instructions may be embodied in various forms such as routines, algorithms, modules or programs including separate applications or code from dynamically linked libraries. Software may also be implemented in various forms such as a stand-alone program, a function call, a servlet, an applet, an application, instructions stored in a memory, part of an operating system or other type of executable instructions.

A memory unit may include a computer-readable medium such as, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, may cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

"Non-transitory computer-readable media" include, but are not limited to, a CD-ROM, a removable flash memory card, a hard disk drive, a magnetic tape, and a floppy disk.

"Computer memory", as used herein, refers to a storage device configured to store digital data or information which can be retrieved by a computer or processing element.

In one example, the instructions may cause the processor to operate and synchronize the actuation of the switches of the DC-to-DC power converter circuit according to a designated switching sequence, as disclosed below.

The primary stage may include a first primary winding **Tr1-P** and a second primary winding **Tr2-P,** each connected to a current input at their respective midpoints. Each of the first primary winding and the second primary winding may be connected in parallel, at their respective ends, to a first conversion stage **CPP1** and a second conversion stage **CPP 2,** respectively. In one aspect, the first primary winding may be connected to the current input via an inductor **L1** connected at a mid-point of the first primary winding.

The first conversion stage may include a first primary switch **T1** connected in series to a first end of the first primary winding, and a second primary switch **T2** connected in series to a second end of the first primary winding. Both the first primary switch and the second primary switch may be connected to common potential **PC** opposite the first primary winding. The first conversion stage may further include a first auxiliary switching circuit **CAC1** and a second auxiliary switching circuit **CAC2.** The first auxiliary switching circuit may include a storage circuit **SC1,** depicted if FIG. 2C, having a snubber capacitor **Cs1** and a snubber diode **Ds1.** In one aspect, the snubber capacitor and the snubber diode may be connected in series. In another aspect, the snubber capacitor and the snubber diode may be connected in parallel with the first primary switch **T1.** The first auxiliary switching circuit may further include a recirculation circuit **RC1,** depicted in FIG. 2F, including a recirculation inductor **Lr1,** a recirculation diode **Dr1,** and a recirculation switch **T7.** In one aspect, the recirculation inductor, the recirculation diode, and recirculation switch may be connected in series. In one example, the recirculation switch may be connected in series with the first end of the second primary winding. In one aspect, the recirculation diode may be connected between the snubber capacitor and the snubber diode of the storage circuit **SC1.** The recirculation switch may be used to enable or disable the recirculation circuit when the recirculation switch is closed (conducting) or open (non-conducting), respectively.

The second auxiliary switching circuit may include a storage circuit **SC2,** depicted in FIG. 2C, having a snubber capacitor **Cs2** and a snubber diode **Ds2.** In one aspect, the snubber capacitor and the snubber diode may be connected in series. In another aspect, the snubber capacitor and the snubber diode may be connected in parallel with the second primary switch **T2.** The second auxiliary switching circuit may further include a recirculation circuit **RC2,** depicted in FIG. 2F, including a recirculation inductor **Lr2,** a recirculation diode **Dr2,** and a recirculation switch **T8.** In one aspect, the recirculation inductor, the recirculation diode, and recirculation switch may be connected in series. In one example, the recirculation switch may be connected in series with the second end of the second primary winding. In one aspect, the recirculation diode may be connected between the snubber capacitor and the snubber diode of the storage circuit **SC2.** The recirculation switch may be used to enable or disable the recirculation circuit when the recirculation switch is closed (conducting) or open (non-conducting), respectively.

The second conversion stage may include a third primary switch **T3** connected in series at a first end of the second primary winding, and a fourth primary switch **T4** connected in series at a second end of the second primary winding. Both the third primary switch and the fourth primary switch may also be connected to the common potential opposite the second primary winding. The second conversion stage may further include a third auxiliary switching circuit **CAC3** and a fourth auxiliary switching circuit **CAC4.** The third auxiliary switching circuit may include a storage circuit **SC3,** depicted in FIG. 2D, having a snubber capacitor **Cs3** and a snubber diode **Ds3.** In one aspect, the snubber capacitor and the snubber diode may be connected in series. In another aspect, the snubber capacitor and the snubber diode may be connected in parallel with the third primary switch **T3.** The third auxiliary switching circuit may further include a recirculation circuit **RC3,** depicted in FIG. 2E, including a recirculation inductor **Lr3,** a recirculation diode **Dr3,** and a recirculation switch **T5.** In one aspect, the recirculation inductor, the recirculation diode, and recirculation switch may be connected in series. In one example, the recirculation switch may be connected in series with the first end of the first primary winding. In one aspect, the recirculation diode may be connected between the snubber capacitor and the snubber diode of the storage circuit **SC3.** The recirculation switch may be used to enable or disable the recirculation circuit when the recirculation switch is closed (conducting) or open (non-conducting), respectively.

The fourth auxiliary switching circuit **CAC4** may include a storage circuit **SC4,** depicted in FIG. 2D, having a snubber capacitor **Cs4** and a snubber diode **Ds4.** In one aspect, the snubber capacitor and the snubber diode may be connected in series. In another aspect, the snubber capacitor and the snubber diode may be connected in parallel with the fourth primary switch **T4.** The fourth auxiliary switching circuit may further include a recirculation circuit **RC4,** depicted in FIG. 2E, including recirculation inductor **Lr4,** a recirculation diode **Dr4,** and a recirculation switch **T6.** In one aspect, the recirculation inductor, the recirculation diode, and the recirculation switch may be connected in series. In one example, the recirculation switch may be connected in series with the second end of the first primary winding. In one aspect, the recirculation diode may be connected between the snubber capacitor and the snubber diode of the storage circuit **SC4.** The recirculation switch may be used to enable or disable the recirculation circuit when the recirculation switch is closed (conducting) or open (non-conducting), respectively.

The first primary winding and the second primary winding, with their respective conversion stages, may be connected head-to-tail to the common potential. In this manner, the positive potential of the second primary winding and its conversion stage may be connected to the negative potential of the first primary winding and its respective conversion stage.

In one aspect, the secondary stage may include a single secondary winding **TR1-S** or two secondary windings (first secondary winding **TR1-S** and second secondary winding **TR2-S).** The single secondary winding may be magnetically coupled to either the first primary winding or the second primary winding. Alternatively, each of the two secondary windings may be magnetically coupled to one of the first primary winding and the second primary winding, respectively. In the example of the secondary stage comprising a single secondary winding, the single secondary winding may be coupled to a first rectifier circuit composed of rectifier diodes **D1, D2, D1',** and **D2'.** The output voltage **VS** from the secondary stage may be filtered through capacitor **C1.** In one aspect, the output of the secondary stage may be available to source a current to one or more electrical systems of the vehicle. Alternatively, the output of the secondary stage may be stored in the vehicle onboard electrical storage device. Further, in the example of the secondary stage composed of the single secondary winding, the rectifier circuit may also include multiple secondary switches **T9, T10, T11,** and **T12.** In one aspect, secondary switches **T9, T10, T11,** and **T12** may be connected in parallel with respective rectifier diodes **D1, D2, D2',** and **D1'.** Each secondary switch may short out the ends of its respective rectifier diode when in a closed or conducting configuration.

In the example of the secondary stage comprising a two secondary winding, the first secondary winding may be coupled to the first rectifier circuit as discussed above. Additionally, the second secondary winding may be coupled to a second rectifier circuit composed of second rectifier diodes **D3, D4, D3',** and **D4'.** In one example, the output voltage from the second secondary stage may be filtered through capacitor **C1** and may be coupled in parallel to the output voltage of the first secondary stage. In one aspect, the output of the second secondary stage may be available to source a current to one or more electrical systems of the vehicle. Alternatively, the output of the second secondary stage may be stored in the vehicle onboard electrical storage device. Further, second rectifier circuit may also include a second multiple of secondary switches **T9', T10', T11',** and **T12'.** In one aspect, secondary switches **T9', T10', T11',** and **T12'** may be connected in parallel with respective rectifier diodes **D3, D4, D4',** and **D3'.** Each of the second multiple of secondary switch may short out the ends of its respective second rectifier diode when in a closed or conducting configuration.

The power converter control circuit may control the operation of the primary switches, the recirculation switches, the first multiple of secondary switches, and the second multiple of secondary switches. In one example, the power converter control circuit may control the operation of the primary switches, the recirculation switches, and secondary switches to operate in the forward power conversion mode. In an alternative example, the power converter control circuit may control the operation of the primary switches, the recirculation switches, and secondary switches to operate in the backward power conversion mode, as disclosed below.

The primary switches, the recirculation switches, the first multiple of secondary switches and the second multiple of secondary switches (together, "the switches") may include any device or devices which may control a current flowing therethrough based on an input switch signal. In one aspect, the power converter control circuit may produce logic signals to generate the input switch signals. The switches may all include the same type of switch or may include multiple types of switches. The switches may include electromechanical switches (such as relays) or electronic switches (such as transistors and the like) In some examples, the electronic switches may include NPN or PNP transistors (bipolar junction transistors). The switches may be unidirectional switches or bidirectional switches. Non-limiting examples of such switches may include GTO thyristors, IGCT thyristors, triacs, FET type transistors, bipolar, IGBT, MOSFET or similar transistors, or combination of these switches.

For simplicity in the following discussion, a first arm may be defined by primary switches **T1** and **T3** and their corresponding auxiliary switching circuits **CAC1** and **CAC3.** Similarly, a second arm may be defined by the primary switches **T2** and **T4** and their corresponding auxiliary switching circuits **CAC2** and **CAC4.**

The storage circuits each may each comprise an overvoltage protection capacitor, or snubber capacitor, and an associated protection diode, or snubber diode, connected in series therewith. Each storage circuit may be connected in parallel with its corresponding primary switch. Further, each snubber capacitor may be connected in series with its respective first primary winding or second primary winding.

The recirculation circuit **RC1** of the first auxiliary switching circuit may be connected between the negative potentials of the snubber capacitors **Cs1, Cs3** of the first arm. The recirculation circuit **RC3** of the third auxiliary switching circuit of the second conversion stage may be connected between the positive potentials of the snubber capacitors **Cs1, Cs3** of the first arm.

Similarly, the recirculation circuit **RC2** of the second auxiliary switching circuit of the first conversion stage may be connected between the negative potentials of the snubber capacitors **Cs2, Cs4** of the second arm. The recirculation circuit **RC4** of the fourth auxiliary switching circuit of the second conversion stage may be connected between the positive potentials of the snubber capacitors **Cs2, Cs4** of the second arm.

As disclosed above, the DC-to-DC power converter system may operate in a forward power conversion mode by converting the off-board DC power to an onboard DC power for onboard use or storage. Additionally, the DC-to-DC power converter system may operate in a backward power conversion mode by converting the onboard DC power to an off-board DC power for off-board use or storage.

### Forward Power Conversion Mode

The forward power conversion mode of operation of the DC-to-DC power converter system is disclosed below. In one aspect of the forward power conversion mode of operation, all of the recirculation switches are closed (conducting), thereby enabling their respective recirculation circuits. In one aspect, all of the secondary switches are open (non-conducting), thereby enabling the operation of their respective rectifiers. As disclosed above, the operation of the primary switches **T1-T4** along with the recirculation switches and the secondary switches may be controlled by the power converter control circuit.

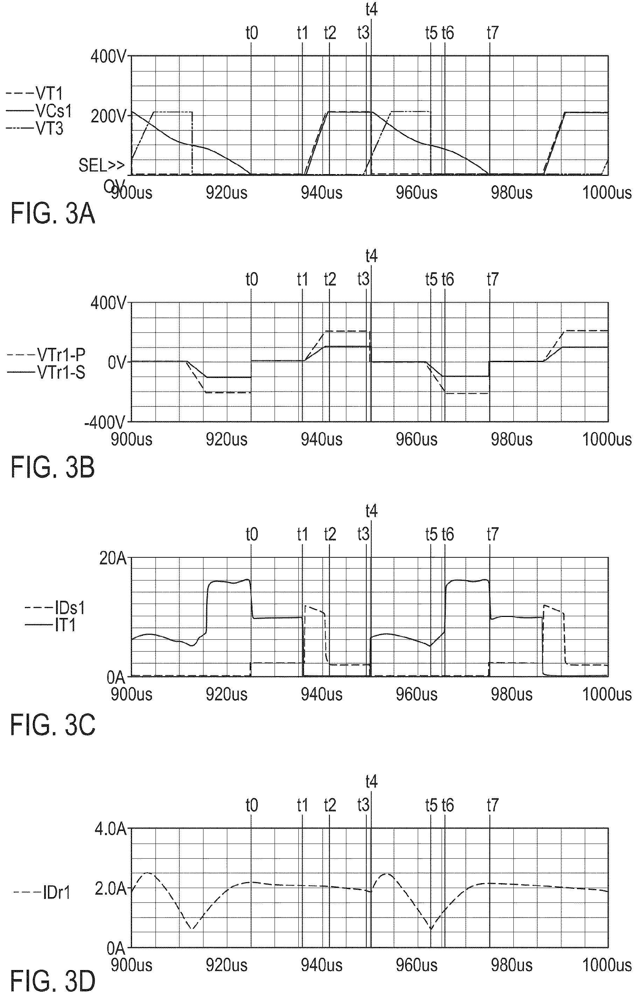

As illustrated in FIGS. 3A - 3D, any electrical energy stored in the storage circuits of the auxiliary switching circuits may be discharged to the other part of the respective arm via recirculation inductors **Lr1** - **Lr4** of the corresponding recirculation circuits when the primary switches **T1-T4** are opened.

In the first conversion stage, the snubber diodes **Ds1** and **Ds2,** as well as the recirculation diodes **Dr1, Dr2,** are oriented to conduct energy from the respective recirculation inductors **Lr1, Lr2** to the common potential. Conversely, in the second conversion stage, the snubber diodes **Ds3, Ds4,** as well as the recirculation diodes **Dr3, Dr4,** are oriented to conduct energy from the common potential towards the corresponding recirculation inductors **Lr3, Lr4.**

In the embodiment shown in FIG. 2A, the secondary stage comprises two secondary windings **Tr1-S, Tr2-S.** The terminals of each secondary winding may be connected to respective first and second rectifier circuits. The first secondary winding may be connected to the first rectifier circuit that includes a first bridge of rectifier diodes **D1, D2, D2', D1.** The second secondary winding may be connected to the second rectifier circuit that includes a second bridge of diodes **D3, D4, D4',** and **D3'.**

Each group composed of a secondary winding and its rectifier circuit, may be connected in parallel to an output storage and filtering device, for example capacitor **C1.** The terminals of the output storage and filtering device define the output voltage **VS** of the DC-to-DC power converter circuit.

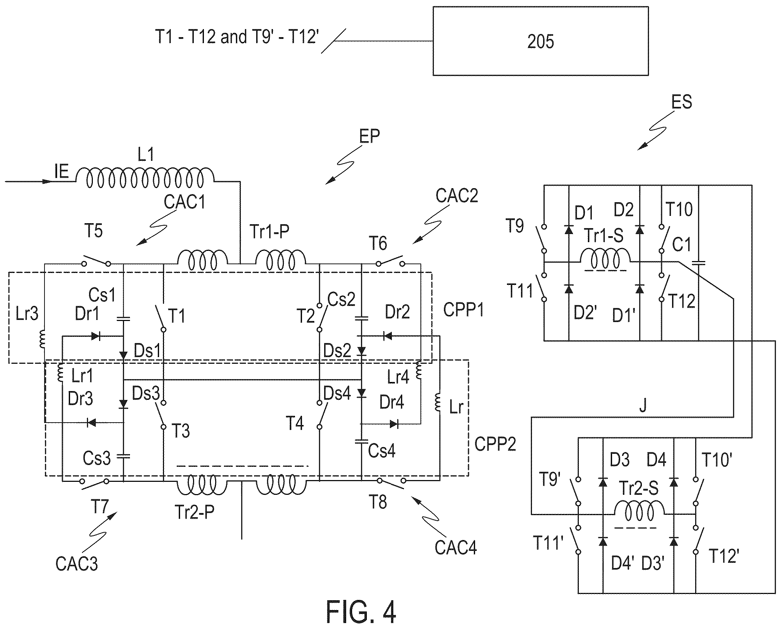

A second example of the secondary stage, illustrated in FIG. 4, depicts the first secondary winding and the second secondary winding connected in series by a conductor **J.**

In this second example, it is possible to adjust the phase shift of the controls of the controlled switches **T1, T2** of the first conversion stage compared to the controlled switches **T3, T4** of the second conversion stage. Thus, switches **T1** and **T3** may be controlled together, and switches **T2** and **T4** may be controlled together. Switches **T1** and **T3** may operate at about 180° out of phase with respect to switches **T2** and **T4.** This configuration significantly increases the potential excursion of the ratio of input voltage **VE** to output voltages **VS.**

Omitting, initially, the auxiliary switching circuits, the topology of the primary stage may be similar to that of two DC-to-DC power converters (with current input) arranged in series. Since the converter has a current input passing through inductor **L1,** it can be understood -- as a first approximation -- that switches **T1, T2** of the first conversion stage may not be opened simultaneously and, similarly, that switches **T3, T4** of the second conversion stage are not opened simultaneously. Such a configuration may result in current flyback through one or more of inductors **L1, Tr1-P,** and/or **Tr2-P.**

In the case of a single controlled switch closed among the controlled switches T1, T2 of the first conversion stage CPP1 (or, respectively, among the controlled switches T3, T4 of the second conversion stage CPP2), the voltage at the terminals of the open switch is the voltage at the terminals of the primary winding Tr1-P (respectively of the secondary winding Tr2-P). This voltage is equal, at the winding ratio m, to half the voltage at the terminals of the secondary winding Tr1-S (respectively of the secondary winding Tr2-S), i.e., after the adjustment of the voltage m×VS/2. A total voltage m×VS then applies to the primary stage. Similarly, the current passing through the closed switch among the controlled switches T1, T2 of the first conversion stage CPP1 (respectively T3, T4 of the second conversion stage) is IE.

In the case of the two closed controlled switches T1, T2 on the first conversion stage CPP1 (T3, T4 on the second conversion stage CPP2, respectively), the voltage at the terminals of the primary winding Tr1-P (the secondary winding Tr2-P, respectively) is reduced to zero. In this case, there is no energy transfer from primary stage EP to secondary stage ES. The primary stage EP has zero voltage and the current IE is then shared between the two controlled switches on each stage.

If α is defined as the cyclic ratio of closure of the primary switches (50% <α< 100%) and if the two primary switches of each conversion stage are operated at opposing phases (that is, operate at 180° out of phase with respect to each other) the voltage presented by the primary stage may be varied by the choice of α.

The auxiliary switching circuit associate with each primary switch may permit a wider operation of the DC-to-DC power converter circuit by allowing the primary switches of the same conversion stage to open simultaneously (that is, to have a cyclic ratio α of less than 50%). This type of operation may be useful when the input voltage is greater than a multiple of the output voltage. For example, this mode of operation may be useful when the converter starts, and the output voltage VS is initially zero.

Additionally, the use of an auxiliary switching circuit associate with each primary switch may reduce losses when the primary switches are opened. This effect may result from redirecting the current in the corresponding capacitor Cs1 - Cs4 and limiting the overvoltage generated when the primary switches open. In one aspect, the overvoltage may be due to the leakage inductor of the primary windings, which cannot be canceled. Additionally, the auxiliary switching circuits may limit losses when the primary switches are closed by slowing down the current increase during switching. The auxiliary switching circuits reduce the disturbances generated by the DC-to-DC power converter circuit by slowing down the waveform fronts during switching.

The curves shown in FIGS. 3A - 3D illustrate, in an exemplary cycle, the development of voltages and currents in the first arm of the aspect of the primary stage of the conversion circuit illustrated in FIGS. 2A-2F. These curves correspond to the following operating parameters, as non-limiting examples:
- the switching frequency of the controlled switches T1 - T4 is equal to 20kHz,
- the winding ratio m between the first primary winding and the first secondary winding is equal to 2 (which corresponds to Tr1-P /Tr1-S=2/1),
- the input voltage VE is equal to 100V, the output voltage VS is equal to 100V, and the input current IE is equal to 10A,
- the capacitance of the snubber capacitors Cs1 - Cs4 is 200nF, the value of the recirculation inductors Lr1 - Lr4 is 400µH,
- the cyclic ratio α of the primary switches is set at 72%
- the phase shift of the primary switches is equal to the following values: φT1 and φT3 =0°, and φT2 and φT4=180°.

The operation of the system may be divided into 7 phases representing in total a switching period extending in this example from time point t0=925µs to time point t7=975µs:

### Phase 1: t0=925 µs to t1=936µs

The primary switch **T1** is closed. The voltage **VT1** at its terminals is then zero and the current **IT1** running through it takes the value **IE.**

Recirculation inductor **Lr1** restores energy. The snubber diode **Ds1** and the recirculation diode **Dr1** are traversed by currents **IDs1** and **IDr1** equal to 2A.

The primary switch **T3** being closed, the current is constantly flowing in recirculation inductor **Lr1.**

As a result, the voltages at the terminals of the snubber diode **Ds1** and capacitor **Cs1** are zero; the snubber capacitor **Cs1** is discharged.

The primary switch **T2** being closed, the first primary winding **Tr1-P** is short-circuited and the voltage **V1r1-P** at its terminals is zero, hence a voltage **VTr1-S** is also zero at the terminals of the secondary winding **Tr1-S.**

### Phase 2: t1=936µs to t2=941µs

The primary switch **T1** is opened at the time point t1=936µs. From this moment on, the current **IT1** passing through **T1** assumes a zero value.

The current that initially passed through the primary switch **T1** is derived in the storage circuit **SC1.** The load of the snubber capacitor **Cs1** is observed until the time point t2=941µs.

The voltage at the terminals of the first primary winding **Tr1-P,** and consequently at the terminals of the first secondary winding **Tr1-S,** gradually increases.

The recirculation diode **Dr1** and recirculation inductor **Lr1** continue to circulate a current **IDr1**=2A.

When the primary switch **T2** is closed, the voltage at the terminals of the snubber capacitor **Cs1** stops growing at the time point t2=941µs, when the voltage at the terminals of the first secondary winding **Tr1-S** reaches the output voltage **VS.** At this moment, the diodes of the rectifier **D1** and **D1'** are switched on and the voltage at the terminals of the primary winding **Tr1-P** stops growing by the effect of coupling the first primary winding **Tr1-P** and the first secondary winding **Tr1-S.**

The current in the snubber diode **Ds1** then falls back to the previous freewheel value of the recirculation inductor **Lr1,** i.e., **IDs1**=2A**.**

### Phase 3: t2=941µs to t3=948µs

The snubber capacitor **Cs1** is charged, the primary switch **T1** is open, the primary switches **T2, T3** are closed. The current of the snubber circuit continues to circulate though the diodes **Ds1, Dr1** and the recirculation inductor **Lr1.**

### Phase 4: t3=948µs to t4=950µs

The primary switch **T3** is opened according to the same sequence as the primary switch **T1** in phase 2.

The freewheel current passes through the diodes **Ds1, Dr1** and the recirculation inductor **Lr1** begins to decrease because the voltage **VT3** at the terminals of the primary switch **T3** increases due to the recirculation of energy from **Lr1.** This energy is transferred into the snubber capacitor Cs3.

### Phase 5: t4=950µs to t5=963µs

The primary switch **T1** is closed at the time point t4=950µs. The load of the snubber capacitor **Cs1** immediately blocks the snubber diode **Ds1,** the voltage **VCs1** at the terminals of the snubber capacitor **Cs1** being approximately 210V. The current increases in the recirculation circuit **Dr1, Lr1:** this is the energy recirculation phase of the snubber capacitor **Cs1.** The voltage **VCs1** at the terminals of the snubber capacitor **Cs1** decreases.

When the rising voltage at the terminals of the primary switch **T3** equals the falling voltage at the terminals of the snubber capacitor **Cs1** (at time point t5=953µs), the current **IDr1** from the discharge of the snubber capacitor **Cs1** reaches its maximum and begins to decrease.

At this point, the auxiliary switching circuit **CAC 1** carries out a resonant energy transfer through recirculation inductor Lr1 and snubber capacitor Cs1, to the second primary winding **Tr2-P.** The energy of the auxiliary switching circuit is thus transferred to the secondary winding, without loss other than those of the semiconductor and reactive components.

Meanwhile, the primary switch **T1** remains closed and is traversed by a current equal to (1/2x**IE** + **IDr1).**

### Phase 6: t5=963µs to t6=966µs

The primary switch **T2** opens in the same sequence as the primary switch **T1** in phase 2.

The primary switch **T3** closes and the voltage **VT3** at the terminals of the switch **T3,** and which allowed the discharge of the snubber capacitor **Cs1** in the second primary winding **Tr2-P** through the recirculation circuit **Dr1, Lr1,** is cancelled. With switches **T1, T3** being closed, the circuit consisting of the snubber capacitor **Cs1** and the recirculation circuit **Dr1, Lr1** together forms a closed loop and the remaining voltage at the terminals of the snubber capacitor **Cs1** transfers to the recirculation inductor **Lr1.**

At the time point t6=966ps, the primary switch **T2** is opened and the input current **IE** passes completely into the closed primary switch **T1.**

### Phase 7: t6=966ps at t7=975µs

Input current **IE** traverses the primary switch **T1,** with the addition of the current of the recirculation inductors **Lr3, Lr4** and the end of the discharge of the snubber capacitor **Cs1.**

The current in the recirculation inductor **Lr1** continues to increase following a sine curve arch. When the snubber capacitor **Cs1** is completely discharged, the snubber diode **Ds1** goes into conduction and the energy stored in the recirculation inductor **Lr1** can flow continuously through the diodes **Ds1, Dr1** and the primary switch **T3.**

As the primary switch **T2** is open, the voltage at the terminals of half of the first primary winding **Tr1-P** located on the side of the first arm is equal to the voltage at the terminals of the first secondary winding Tr1-S by coupling.

The system is then ready for the next cycle.

In another aspect, the secondary switches may close and open synchronously with the activation of the primary switches. In one example, primary switches **T2** and **T4** may open and primary switches **T1** and **T3** may close synchronously with the closing of secondary switches **T10, T11, T9',** and **T12'** and opening of secondary switches **T9, T12, T10',** and **T11'.** Similarly, primary switches **T2** and **T4** may close and primary switches **T1** and **T3** may open synchronously with the opening of secondary switches **T10, T11, T9',** and **T12'** and closing of secondary switches **T9, T12, T10',** and **T11'.** The synchronous operation of the primary switches and the secondary switches may result in a reduced power loss during the switching sequences.

### Backward Power Conversion Mode

The backward power conversion mode of operation of the DC-to-DC power converter system is disclosed below. In one aspect of the backward power conversion mode of operation, all of the recirculation switches are open (non-conducting), thereby disabling their respective recirculation circuits. As disclosed above, the operation of the primary switches **T1-T4** along with the recirculation switches and the secondary switches may be controlled by the power converter control circuit.

In one aspect, the DC-to-DC power converter system may convert power stored in an onboard electrical storage device for use by an off-board power system. One non-limiting example of such off-board power systems may include systems to provide power during emergency situations in which normal power supplies may be ineffective (for example for hospitals lacking a back-up generator). Another non-limiting example of such off-board power systems may include power systems associated with conveyances of the vehicle (for example, a ship transporting the vehicle from one port to another). Under such conditions, the DC-to-DC power converter system may operate in a backward power conversion mode to supply off-board power from the onboard electrical storage device.

Returning to FIG. 2A, the secondary switches may be synchronized to open and close, thereby causing current to flow from the onboard electrical storage device through the secondary windings. For example, the power converter control circuit may close and then open secondary switches **T10** and **T11,** and subsequently close and then open secondary switches **T9** and **T12.** As a result, current flow may alternate directions through the secondary winding **TR1-S.** For the example in which the secondary stage includes two secondary windings, secondary switches **T10, T11, T9',** and **T12'** may close and open synchronously, followed by secondary switches **T9, T12, T10',** and **T11'** closing and opening synchronously. More complex switching sequences may be devised. For example, secondary switches **T10** and **T11** may be closed for a first period of time and then secondary switches **T9'** and **T11'** may be closed after secondary switches **T10** and **T11** open. After secondary switches **T9'** and **T11'** open, secondary switches **T9** and **T12** may close, followed by the closing of secondary switches **T10'** and **T11'** when secondary switches **T9** and **T12** open.

Turning to the primary stage, all recirculation switches may be open, thereby disabling their respective recirculation circuits. In one aspect, all primary switches **T1-T4** may all be closed, while the secondary switches alternate in their activation. In another aspect, the primary switches may close and open synchronously with the activation of the secondary switches. In one example, primary switches **T2** and **T4** may open and primary switches **T1** and **T3** may close synchronously with the closing of secondary switches **T10, T11, T9',** and **T12'** and opening of secondary switches **T9, T12, T10',** and **T11'.** Similarly, primary switches **T2** and **T4** may close and primary switches **T1** and **T3** may open synchronously with the opening of secondary switches **T10, T11, T9',** and **T12'** and closing of secondary switches **T9, T12, T10',** and **T11'.** The synchronous operation of the primary switches and the secondary switches may result in a reduced power loss during the switching sequences

### Alternative DC-to-DC Converter Circuit Geometries

Many variants can be implemented in both the primary stage **EP** and secondary stage **ES** of the DC-to-DC power converter circuit.

In a variation of the embodiment, the primary windings **Tr1-P** and **Tr2-P** may be coupled on the same core. It is thus possible to use only one common secondary winding **Tr1-S** by removing the second rectifier circuit composed of **D3, D4, D4', D3',** and secondary switches **T9'-T12'.** This removal makes it possible to simultaneously control the first primary switches **T1, T3,** on the one hand, and the second primary switches **T2, T4,** on the other hand, and therefore to reduce the number of control lines from the power converter control circuit.

When the primary windings **Tr1-P, Tr2-P** are coupled, it is possible to pair the recirculation inductors **Lr1, Lr3** of the first conversion stage, on the one hand, and to pair the recirculation inductors **Lr2, Lr4** of the second conversion stage, on the other hand, these being crossed by identical waveforms.

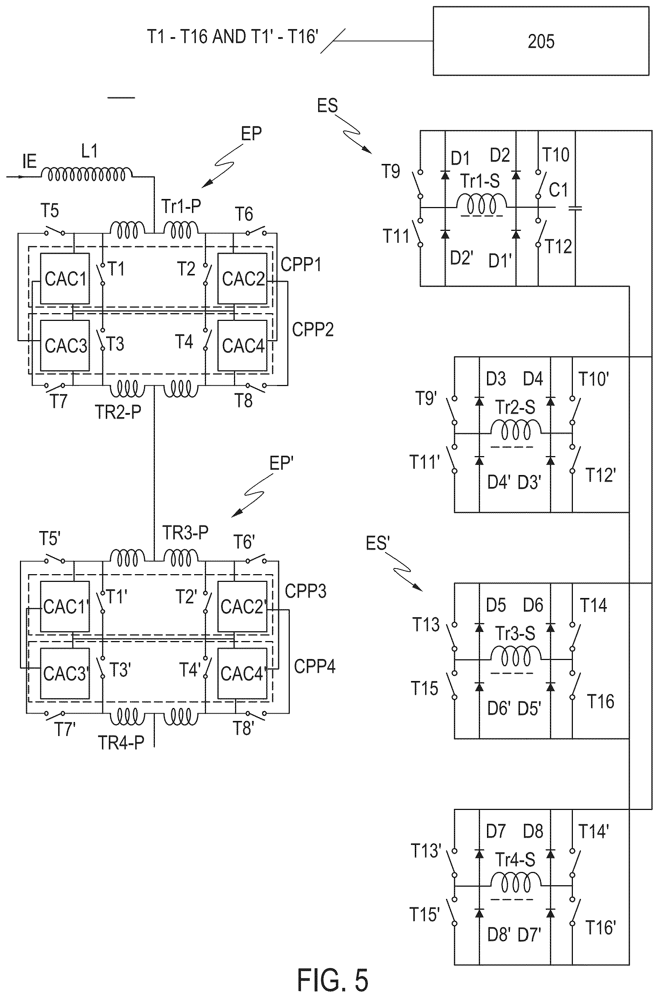

In one alternative example of the proposed DC-to-DC converter circuit, multiple primary stages may be connected in series and several secondary stages may be connected in parallel on several cores of independent transformers. Such an embodiment is proposed in FIG 5 in which the primary stage **EP** of DC-to-DC power converter circuit shown in FIGS 2A and 2B, for example, is connected to a second identical primary stage **EP'** in which the respective primary stages **EP** and **EP'** may be connected in series. Here, the second DC-to-DC power converter circuit **EP'** comprises two primary windings **Tr3-P, Tr4-P** and two conversion stages **CPP3, CPP4** identical to **CPP1** and **CPP2,** respectively, of the DC-to-DC power converter circuit **EP.** It may be understood that conversion stage **CPP3** may include respective primary switches **T1'** and **T2',** and conversion stage **CPP4** may include respective primary switches **T3'** and **T4'.** Further, conversion stage **CPP3** may include respective auxiliary switching circuits **CAC1'** and **CAC2',** and conversion stage **CPP4** may include respective auxiliary switching circuits **CAC3'** and **CAC4'.** The components and their connectivity of the second primary stage **EP'** may be the same as the respective components of the first primary stage **EP,** as disclosed above. The switching sequences of primary stage **EP'** may operate similarly as those of primary stage **EP,** as disclosed above.

Further, the respective secondary stages **ES** and **ES'** may be connected in parallel to the same output capacity **C1.** Here, the second DC-to-DC power converter circuit **ES'** may comprise two secondary windings **Tr3-S, Tr4-S** and two conversion rectifier circuits of the DC-to-DC power converter circuit **ES** shown in FIG. 2A. It may be understood that the rectifier circuit associated with secondary winding **Tr3-S** may include rectifier diodes **D5, D6, D6',** and **D5'** with their associated secondary switches **T13, T14, T15,** and **T16.** Similarly, the rectifier circuit associated with secondary winding **Tr4-S** may include rectifier diodes **D7, D8, D8',** and **D7'** with their associated secondary switches **T13', T14', T15', and T16'.** The components and their connectivity of the second secondary stage **ES'** may be the same as the respective components of the first secondary stage **ES,** as disclosed above. Secondary stage **ES'** may operate similarly to secondary stage **ES.**

The serial connection of the primary stages **EP, EP',...** may be carried out by connecting the negative potential of the first DC-to-DC power converter circuit **EP** to the positive potential of the second DC-to-DC power converter circuit **EP'.** The negative potential of the first DC-to-DC power converter circuit **EP** may be connected at the mid-point of the primary winding **Tr2-P.** The positive potential of the second DC-to-DC power converter circuit **EP'** may be connected to the primary winding **Tr2-P** at the mid-point of the primary winding **Tr3-P.**

Each of the primary switches, auxiliary switches, and secondary switches may be controlled by the power converter control circuit according to its programming. The controls of the primary stages in series can then be independent, synchronized, or even synchronized with a phase offset relative to each other. In the case of independent controls, for example, the control of the switches of the different primary stages can be sequenced at different frequencies. Thus, one of the DC-to-DC power converter circuits can serve as an input filtering device to a second power converter circuit if the actuation of the primary switches on its primary stage is sequenced at a higher frequency. Further, synchronized and offset controls can reduce the fluctuations of the input current and the output voltage. In such an embodiment, and with switches rated at 600V for example, each primary stage **EP, EP',** can withstand a unit voltage of about 400V. Serial connection of multiple primary stages may make it possible to use any high input voltage EV.

In another example of the proposed converter, half-bridge rectifiers may be connected to the secondary windings **Tr1-S, Tr2-S** instead of full-bridge rectifiers, the second arm of the half-bridge rectifiers composed of capacitors in order to achieve a middle point. In this implementation, the topology of FIG. 2A may include, for example, four capacitors instead of diodes **D1, D2', D3,** and **D4'.** Secondary switches **T9, T11, T9',** and **T11'** may be retained for the backward operating mode. This realization may simultaneously make it possible to simplify the rectifier circuit, to perform the output filtering function initially performed only by **C1,** and to create a middle point dividing the voltage **VS** into two equal voltages.

In one alternative aspect, for example in the case of low output voltages, low voltage drop switches (MOS-FET, for example) may be substituted for the rectifier diodes, in order to perform a synchronized adjustment with the primary switches of the primary stage. Such a substitution may allow the current reversibility of the DC-to-DC power converter circuit and the reduction of conduction losses of the rectifier function thus achieved by synchronous adjustment.

An additional alternative of the converter may consist of multiplying the secondary stages of the transformers used and their associated rectifier circuits, which may, for example, produce power supplies at several isolated outputs, notwithstanding the maintenance of at least one winding and its rectifier flowing on an output common to all transformers in order to naturally balance the voltages of the primary stages. Multi-channel converters can then be made, providing, for example on a first secondary stage, a continuous output voltage of 700V intended to power a three-phase inverter, and on an additional independent secondary stage a low output voltage (12V, 24V, 48V, for example) intended to power a battery charger.

## Claims

1. A power converter circuit (200) comprising:
a primary stage (EP) and a secondary stage (ES), the primary stage (EP) comprising a first primary winding (Tr1-P) connected in parallel with a first conversion stage (CPP1), and a second primary winding (Tr2-P) connected in parallel with a second conversion stage (CPP2),
wherein the first conversion stage (CPP1) and the second conversion stages (CPP2) each comprises a first primary switch (T1, T3) and a first auxiliary switching circuit (CAC1, CAC3), and a second primary switch (T2, T4) and a second auxiliary switching circuit (CAC2, CAC4), and
wherein, for each of the first conversion stage (CPP1) and the second conversion stage (CPP2), the first auxiliary switching circuit (CAC1) and the second auxiliary switching circuit (CAC2) comprise:
a storage circuit (SC1, SC2, SC3, SC4) having a snubber capacitor (Cs1, Cs2, Cs3, Cs4) and a snubber diode (Ds1, Ds2. Ds3. Ds4); and
a recirculation circuit (RC1, RC2, RC3, RC4) having a recirculation inductor (Lr1, Lr2, Lr3, Lr4), a recirculation diode (Dr1, Dr2,Dr3, Dr4), and a recirculation switch (T5, T6, T7,T8),
wherein the storage circuit (SC1, SC3) of the first auxiliary switching circuit (CAC1, CAC3) is connected in parallel with the first primary switch (T1, T3), and the storage circuit (SC2, SC4) of the second auxiliary switching circuit (CAC2, CAC4) is connected in parallel with the second primary switch (T2, T4).

2. The power converter circuit of claim 1, further comprising an inductor (L1) connected at a mid-point of the first primary winding.

3. The power converter circuit of claim 1, wherein the secondary stage (ES) comprises:
a first secondary winding (TR1-S) and a second secondary winding (TR2-S); and
a first rectifier circuit (D1, D2, D1', D2') connected to the first secondary winding (TR1-S), and a second rectifier circuit (D2, D3, D2', D4') connected to the second secondary winding (TR2-S),
wherein each of the first rectifier circuit and the second rectifier circuit comprises a respective plurality of secondary switches (T9, T11, T10, T12, T9'. T11', T10', T12')
wherein the plurality of secondary switches are configured to open and the recirculation switch of each of the first auxiliary switching circuit and second auxiliary switching circuit are configured to close in a forward power conversion mode of operation and, in a backward power conversion mode of operation, the primary switches are configured to close and the secondary switches are configured to actuate according to a designated switching sequence to convert power from an output of the secondary stage to an input of the primary stage.

4. The power converter circuit of claim 1 further comprising:
a control circuit (205) configured to control each recirculation switch to enable the respective recirculation circuit in a forward power conversion mode of operation and to disable the recirculation circuit in a backward power conversion mode of operation.

5. The power converter circuit of claim 4, wherein the secondary stage comprises:
a first secondary winding (Tr1-S)_connected to a first rectifier circuit (D1, D2, D1', D2') and a second secondary winding (Tr2-S) connected to a second rectifier circuit (D3, D4, D3', D4'),
wherein each of the first rectifier circuit and the second rectifier circuit comprises a respective plurality of secondary switches (T9, T11, T10, T12, T9', T11', T10', T12'),
wherein the control circuit is further configured to open the plurality of secondary switches and close the recirculation switch of each of the first auxiliary switching circuit and the second auxiliary switching circuit in a forward power conversion mode of operation and, in a backward power conversion mode of operation, to concurrently close the primary switches and actuate the secondary switches according to a designated switching sequence to convert power from an output of the secondary stage to an input of the primary stage.

6. The power converter circuit of claim 5, wherein the control circuit is further configured, in a second forward power conversion mode of operation, to actuate the secondary switches synchronously with the primary switches, to reduce a power loss of the converter relative to operating in the forward power conversion mode of operation with the secondary switches in an open configuration.

7. The power converter circuit of claim 5, wherein the control circuit is further configured, in a second backward power conversion mode of operation, to actuate the primary switches synchronously with the secondary switches, to reduce a power loss of the converter relative to operating in the backward power conversion mode of operation with the primary switches in an open configuration.

8. The power converter circuit of claim 5, wherein the first secondary winding and the second secondary winding are connected in series.

9. The power converter circuit of claim 5, wherein the first primary winding and the second primary winding are configured to magnetically couple with the first secondary winding and the second secondary winding, respectively.

10. The power converter circuit of claim 5, wherein the first primary switches, the second primary switches, each of the recirculation switches of the first auxiliary switching circuits, each of the recirculation switches of the second auxiliary switching circuits, and the plurality of secondary switches comprise electronic switches.

11. The power converter circuit of claim 6, wherein the power converter circuit further comprises:
a second primary stage (EP') and a second secondary stage (ES'), the second primary stage comprising a third primary winding (Tr3-P) connected in parallel with a third conversion stage (CPP3) and a fourth primary winding (Tr4-P) connected in parallel with a fourth conversion stage (CPP4),
wherein the third conversion stage and the fourth conversion stages each comprises a third primary switch (T1', T3') and a third auxiliary switching circuit CAC1', CAC3'), and a fourth primary switch T2', T4'), and a fourth auxiliary switching circuit CAC2', CAC4') and
wherein, for each of the third conversion stage and the fourth conversion stage, the third auxiliary switching circuit and the fourth auxiliary switching circuit comprise:
a second storage circuit having a second snubber capacitor and a second snubber diode; and
a second recirculation circuit having a second recirculation inductor, a second recirculation diode, and a second recirculation switch,
wherein the storage circuit of the third auxiliary switching circuit is connected in parallel with the third primary switch, and the storage circuit of the fourth auxiliary switching circuit is connected in parallel with the fourth primary switch.

12. The power converter circuit of claim 11, wherein the third primary winding (Tr3-P) is connected to the second primary winding (Tr2-P).

13. The power converter circuit of claim 11, wherein the second secondary stage comprises:
a third secondary winding (Tr3-S) connected to a third rectifier circuit (D5, D6, D5', D6'), and a fourth secondary winding (Tr4-S) connected to a fourth rectifier circuit (D7, D8, D7'; D8'),
wherein each of the third rectifier circuit and the fourth rectifier circuit comprises a respective plurality of second secondary switches (T13, T14, T15, T16, T13', T14', T15', T16'), and
wherein the control circuit is further configured to open the plurality of second secondary switches and close the recirculation switch of each of the third auxiliary switching circuit and fourth auxiliary switching circuit in a forward power conversion mode of operation and, in a backward power conversion mode of operation, to concurrently close the second primary switches and actuate the second secondary switches according to a designated switching sequence to convert power from an output of the second secondary stage to an input of the second primary stage.

14. The power converter circuit of claim 13, wherein the third primary switches, the fourth primary switches, each of the second recirculation switches of the third auxiliary switching circuits, each of the second recirculation switches of the fourth auxiliary switching circuits, and the plurality of second secondary switches comprise electronic switches.

15. The power converter circuit of claim 13, wherein the control circuit is further configured, in a second backward power conversion mode of operation, to actuate the second primary switches synchronously with the second secondary switches, to reduce a power loss of the converter relative to operating in the backward power conversion mode of operation with the second primary switches in an open configuration.
